# FASCICULE DE BREVET EUROPEEN

(11) **EP 1 747 834 B1**
(45) Date de publication et mention de la délivrance du brevet: **27.05.2009**
(21) Numéro de dépôt: 06117071.8
(22) Date de dépôt: 12.07.2006
(51) Int. Cl.: B23H 9/10, B23H 9/14, B23K 26/38, F01D 5/18

(54) **Canal de refroidissement menage dans une paroi**
In einem Wandteil versehenen Kühlkanal
Cooling channel within the wall of a part.

(30) Priorité: 26.07.2005 FR 0507924
(43) Date de publication de la demande: 31.01.2007
(73) Titulaire: SNECMA, 75015 Paris (FR)
(72) Inventeur: CAMHI, Emmanuel, 13710, FUVEAU (FR); CROUILBOIS, Laurent, 91800, BRUNOY (FR); MAREIX, Jean-Pierre, 77590, CHARTRETTES (FR); PASQUIET, Didier, 77310, BOISSISE LE ROI (FR)
(74) Mandataire: Barbin le Bourhis, Joël

(56) Documents cités:
- EP-A- 0 267 718
- PATENT ABSTRACTS OF JAPAN vol. 2000, no. 08, 6 octobre 2000 (2000-10-06) & JP 2000 141069 A (TOSHIBA CORP), 23 mai 2000 (2000-05-23)

## Description

L'invention a pour objet un procédé pour ménager un canal de refroidissement dans une paroi, une électrode utilisée pour la mise en oeuvre de ce procédé, un élément de paroi dans lequel est ménagé un canal de refroidissement et une aube creuse de turbomachine comprenant un élément de paroi de ce type.

Plus précisément, l'invention concerne un élément de paroi du type comprenant une surface intérieure et une surface extérieure, cette surface extérieure étant susceptible d'être refroidie par de l'air frais circulant dans ledit canal de refroidissement. En outre, le canal de refroidissement est du type comprenant un perçage et une partie de diffusion, le perçage débouchant d'un côté sur la surface intérieure de la paroi et, de l'autre côté, sensiblement au fond de la partie de diffusion en formant un orifice, et la partie de diffusion s'évasant à partir de cet orifice et débouchant sur la surface extérieure de la paroi.

Le document US 6,183,199 B1, montre un exemple d'élément de paroi d'aube creuse de turbine de turboréacteur, traversé par un canal de refroidissement du type précité. Dans cet exemple, le perçage du canal et la partie de diffusion sont réalisés par électroérosion en une seule étape, à l'aide d'une unique électrode dont le bout présente une partie avant de forme correspondant à celle du perçage et une partie arrière correspondant à celle de la partie de diffusion du canal.

Une électrode de ce type est décrite et représentée dans le document US 4,197,443 auquel il est fait référence dans le document US 6,183,199 B1. Comme on peut le constater, la forme de cette électrode est particulièrement complexe. En outre, de manière générale, ménager un canal par électroérosion selon les procédés connus reste une opération longue et coûteuse.

L'invention a donc pour but de proposer une alternative aux procédés connus, offrant la possibilité de ménager un canal de refroidissement du type précité, plus rapidement et à moindre coût.

Pour atteindre ce but, l'invention a pour objet un procédé tel que défini dans la revendication 1.

Selon le procédé de l'invention, il est donc possible d'employer des techniques et des matériels différents pour réaliser le perçage et la partie de diffusion.

Pour réaliser le perçage, on peut percer la paroi par électroérosion ou à l'aide d'un laser.

Avantageusement, on utilise les techniques connues de perçage au laser, ces techniques étant beaucoup plus rapides et économiques que les techniques d'électroérosion. Ainsi, pour percer au laser une paroi d'aube creuse de turbine, seuls quelques dixièmes de seconde sont généralement nécessaires.

Si on souhaite néanmoins réaliser le perçage et la partie de diffusion par électroérosion, on emploie deux électrodes différentes pour chacune de ces parties. Ces électrodes ont une forme plus simple que celle des électrodes utilisées jusqu'à présent, elles sont donc plus faciles et plus économiques à fabriquer. Par exemple, pour réaliser le perçage, on peut utiliser une électrode cylindrique.

Selon un autre aspect de l'invention, pour réaliser la partie de diffusion, on utilise une électrode caractérisée en ce que le bout de cette électrode a la forme d'un cône dont l'extrémité est arrondie et dont la surface conique latérale présente un méplat, l'axe du cône ne traversant pas ledit méplat.

La forme d'électrode précitée permet, d'une part, de ne pas créer d'angle vif au fond de la partie de diffusion, les angles vifs constituant généralement des zones de départ de criques (fissures).

D'autre part, cette forme d'électrode et ses dimensions par rapport au perçage permettent de ménager une partie de diffusion de géométrie suffisamment large et évasée pour que, compte tenu des tolérances de réalisation du perçage et de la partie de diffusion, quelle que soit la position relative du perçage par rapport à la partie de diffusion, cette dernière assure une bonne diffusion (i.e. un bon guidage et un bon élargissement) du flux d'air sortant du perçage.

L'invention a également pour objet un élément de paroi tel que défini dans la revendication 5, dans lequel est ménagé un nouveau type de canal de refroidissement. Un tel canal peut être obtenu à l'aide du procédé et de l'électrode selon l'invention.

Ce canal se caractérise en ce qu'il comprend une partie de diffusion avec un fond avant sensiblement plat, incliné dans l'épaisseur de la paroi, s'étendant à l'avant de l'orifice dans le sens d'écoulement de l'air frais, et une bordure s'étendant à l'arrière, sur les côtés et à l'avant de l'orifice, cette bordure rejoignant les côtés du fond avant.

Avantageusement, l'angle formé entre la bordure et le fond avant dans un plan perpendiculaire au fond avant n'est pas "vif" en ce sens qu'il est strictement supérieur à 90°. On évite ainsi de créer des zones de départ de criques.

Enfin, l'invention a pour objet une aube creuse de turbine à gaz comprenant un élément de paroi du type précité.

L'invention et ses avantages seront mieux compris à la lecture de la description détaillée qui suit. Cette description fait référence aux figures annexées, sur lesquelles :
- la figure 1 est une section d'un exemple d'élément de paroi selon l'invention comprenant un canal de refroidissement ;
- la figure 2 est une vue en perspective du bout de l'électrode utilisée pour réaliser la partie de diffusion du canal de la figure 1 ;
- la figure 3 est une vue de dessus du canal de la figure 1, selon la direction III orthogonale à la surface extérieure de la paroi ;
- la figure 4 est une vue du canal de la figure 1 selon la direction IV, c'est-à-dire suivant l'axe du perçage du canal ;
- la figure 5 est une coupe selon le plan V-V de la figure 3.

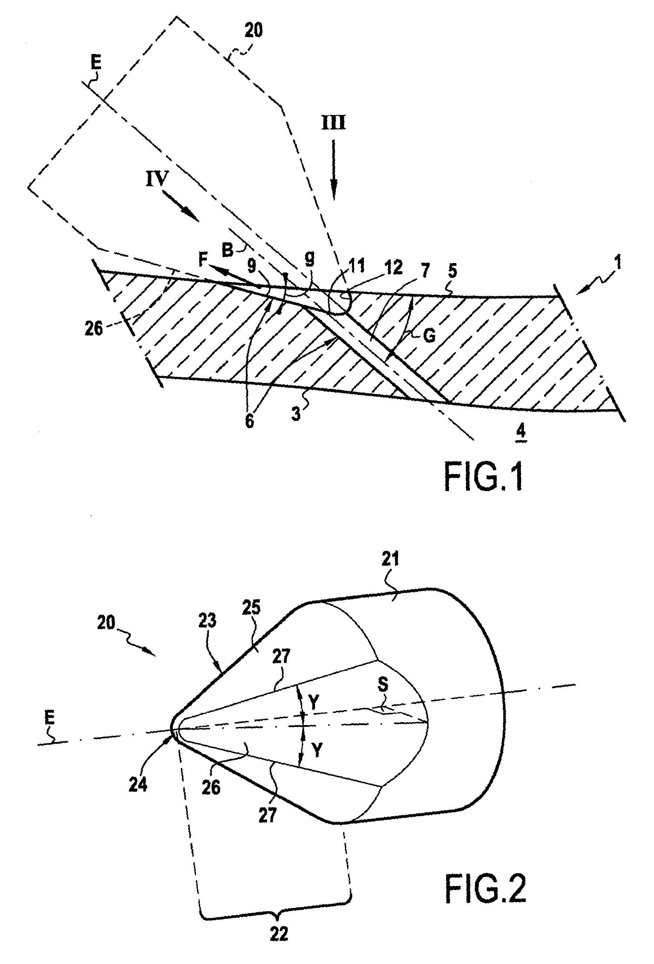

En référence aux figures 1, 3, 4 et 5, nous allons décrire un exemple d'élément de paroi selon l'invention.

Ledit élément de paroi présente une surface intérieure 3 et une surface extérieure 5. Cet élément appartient à une paroi 1 d'aube creuse de turbine à gaz, comme une aube de turbine, de type haute pression, de turboréacteur. Ce type d'aube creuse comprend un passage de refroidissement interne 4, délimité en partie par la surface intérieure 3, ce passage étant alimenté en air frais.

La surface extérieure 5 de la paroi 1 est, quant à elle, soumise aux gaz chauds traversant la turbine et doit donc être refroidie. Dans ce but, des canaux de refroidissement sont prévus dans la paroi 1. Au moins une partie de ces canaux est du type du canal 6 représenté sur la figure 1. Ce canal 6 est traversé par l'air frais en provenance du passage de refroidissement interne 4 de l'aube, et délivre cet air frais au niveau de la surface extérieure 5 pour la refroidir. Le canal 6 est en deux parties : une partie de réglage formée par un perçage 7 et une partie de diffusion 9 formée par une empreinte ménagée dans la paroi 1 au niveau de la surface extérieure 5.

On parle de partie de réglage, car la section minimum du perçage 7 permet de régler le débit d'air traversant le canal 6. Avantageusement, le perçage 7 est de forme simple. Dans l'exemple représenté, le perçage 7 s'inscrit dans un cylindre de révolution. En outre, l'axe B du perçage 7 est incliné d'un angle G, par rapport à la surface extérieure 5 (ou si cette surface 5 n'est pas plane, la tangente à celle-ci au niveau de l'axe B). L'angle G est inférieur à 90° et, de préférence, compris entre 15 et 80°, afin de rabattre le flux d'air F vers la surface extérieure 5 de sorte qu'il reste le plus près possible celle-ci. En d'autres termes, on cherche à rendre les vecteurs vitesse du flux d'air F à la sortie du canal 6, les plus parallèles possibles au plan de la surface extérieure 5.

Pour rabattre encore le flux d'air F vers la surface extérieure 5 et élargir ce flux d'air F dans le plan de la surface extérieure 5, le canal 6 présente une partie de diffusion 9 surmontant le perçage 7. Cette partie de diffusion 9 s'évase autour de l'orifice 11, par lequel l'air frais sort du perçage 7. Cet orifice 11 se situe, de préférence, sensiblement au fond de la partie de diffusion 9, par rapport à la surface extérieure 5. La partie de diffusion 9 comprend, à l'avant de l'orifice, dans le sens d'écoulement du flux F, un fond avant 13 sensiblement plan, incliné dans l'épaisseur de la paroi d'un angle g par rapport à la surface extérieure 5. De préférence, l'angle g est compris entre 2 et 45° et, en tout état de cause, il est inférieur à l'angle G de sorte que le flux d'air F, guidé par le fond avant 13, est rabattu vers la surface extérieure 5.

Le fond avant 13 favorise le rapprochement du flux d'air frais F sortant du perçage 7, de la surface extérieure 5. Ainsi, ce flux d'air reste en contact avec la surface extérieure 5, ce qui permet d'une part de refroidir la surface 5 par échange de chaleur et, d'autre part, de créer un film d'air protecteur sur cette surface 5 qui maintient à distance les gaz chauds du milieu dans lequel la paroi 1 est située.

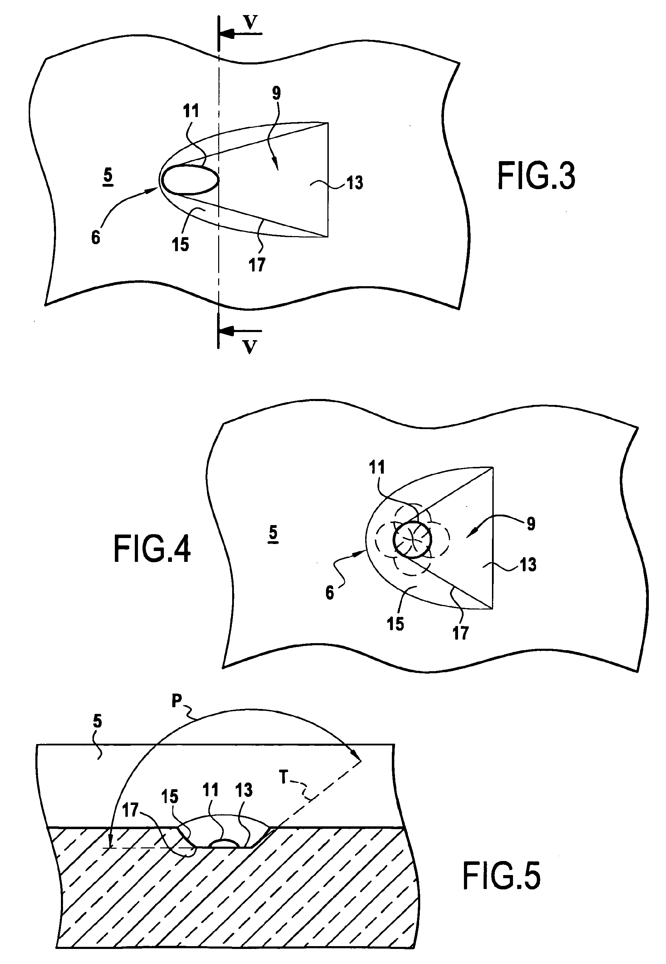

Avantageusement, le contour du fond avant 13 a la forme générale d'un triangle dont l'un des sommets est tourné vers ledit orifice 11 (voir figures 3 et 4), ce qui permet d'élargir le flux d'air F sortant du perçage 7 et donc de refroidir et protéger une plus grande partie de la surface extérieure 5. Bien entendu, la base opposée audit sommet, est plus large que l'orifice 11, de manière à élargir le flux d'air F.

A l'arrière, sur les côtés et à l'avant de l'orifice 11 se situe une bordure 15. La bordure 15 encercle partiellement l'orifice 11 et rejoint, vers l'avant, les côtés du fond avant 13.

Dans l'exemple de la figure 5, les zones de jonction entre la bordure 15 et le fond avant 13 présentent des arêtes 17. L'angle P formé au niveau de ces arrêtes entre la bordure 15 et le fond avant 13 lui-méme, dans un plan perpendiculaire au fond avant 13, est strictement supérieur à 90° pour ne pas fragiliser l'élément de paroi 1. L'angle P est mesuré entre la tangente T à la bordure 15, au niveau de l'arrête 17, et le fond avant 13, comme représenté sur la figure 5.

Il est également possible de prévoir un arrondi dans chaque zone de jonction afin d'éviter la présence d'arête. Dans ce cas l'angle P est mesuré entre la direction générale de la bordure 15 et le fond avant 13.

Dans l'exemple de la figure 1, la partie arrière de la bordure 15 s'évase vers l'arrière au niveau de l'orifice 11 puis présente une lèvre 12 vers l'avant au niveau de la surface extérieure 5. Cette lèvre 12 aide à guider le flux d'air frais vers l'avant.

Le fond avant 13 et la bordure 15 s'inscrivent dans un cône 23 dont l'extrémité 24 est arrondie et dont la surface conique 25 présente un méplat 26. Le fond avant 13 correspond avec ce méplat 26, tandis que la bordure 15, comme représenté sur les figures 1 et 4, correspond essentiellement, dans sa partie arrière, avec l'extrémité arrondie 24 du cône 23 et, dans ses parties latérales et avant, avec les portions de surface conique 25 bordant le méplat 26. Avantageusement, l'axe E du cône 23 et l'axe B du perçage 7 sont parallèles, l'axe B étant, de préférence, décalé vers la surface extérieure 5, comme représenté sur la figure 1.

La forme du canal de refroidissement 6 de l'élément de paroi 1 étant bien comprise, nous allons maintenant décrire un exemple de procédé selon l'invention, permettant de ménager un canal de ce type.

Selon une première étape du procédé, on perce la paroi 1 au laser. Les techniques de perçage au laser sont connues de l'homme du métier et présentent l'avantage d'être rapides et moins onéreuses que les techniques d'électroérosion.

Ensuite, selon une deuxième étape, on forme par électroérosion dans la paroi 1, au niveau de la surface extérieure 5, l'empreinte correspondant à la partie de diffusion 9. Bien entendu, cette deuxième étape pourrait être entreprise avant la première étape.

Pour cette deuxième étape, on utilise une électrode 20 du type de celle représentée sur la figure 2. Le corps de l'électrode 21 est cylindrique tandis que le bout 22 de l'électrode a la forme d'un cône 23 à l'extrémité 24 arrondie et dont la surface conique latérale 25 présente un méplat 26. Ce méplat 26 s'étend sur un côté du cône 23, depuis le voisinage de l'extrémité 24 jusqu'à la partie la plus évasée du cône 23 et au-delà. Le méplat 26 n'est pas traversé par l'axe E du cône 23 : il ne coupe donc pas le sommet de l'extrémité 24 du cône 23. Le cône 23 est symétrique par rapport à un plan de symétrie S perpendiculaire au méplat 26 et contenant l'axe E du cône 23. Les demi-angles d'évasement Y définis entre les bords latéraux 27 du méplat et le plan S sont compris entre 10 et 30° et, de préférence, sont voisins de 15°.

Comme représenté sur la figure 1, on forme l'empreinte correspondant à la partie de diffusion 9 par électroérosion, en enfonçant le bout 22 de l'électrode 20 dans la paroi 1 du côté de la surface extérieure 5, le méplat 26 étant positionné face à cette surface extérieure 5. Avantageusement, lors de cette opération, on oriente l'axe E du cône 23 de sorte qu'il soit parallèle à l'axe B du perçage 7, ces axes étant, de préférence, décalés de sorte que l'axe B soit le plus proche de la paroi 1.

On notera que la présence et l'importance de la lèvre 12 de la bordure 15 (i.e. son avancée vers l'avant) dépendent du rayon de courbure retenu pour l'extrémité 24 et de la profondeur à laquelle on enfonce l'électrode 20.

De manière générale, lorsqu'on forme l'empreinte, on choisit : la forme de l'électrode 1, plus particulièrement, la forme du cône 23, le rayon de courbure de l'extrémité arrondie 24 et la position du méplat 26 (demi-angles d'évasement Y); le positionnement de l'électrode, plus particulièrement, l'orientation de l'axe E du cône 23 par rapport à l'axe B du perçage 7 ; et la profondeur de pénétration de l'électrode 20 dans la paroi 1, de manière à former à l'avant de l'orifice 11 le fond avant 13 et, à l'arrière et sur les côtés de l'orifice 11, une bordure évasée 15 qui rejoint les côtés du fond avant 13 en formant deux arêtes 17. Ces arêtes sont suffisamment peu vives pour ne pas créer de zones de fragilisation (voir figure 5).

La présence de la bordure arrière 15 permet de réaliser la partie de diffusion 9 avec une certaine tolérance vis-à-vis du perçage 7. Ceci est illustré sur la figure 4, sur laquelle on a représenté en pointillés diverses positions relatives de l'orifice 11 par rapport à la partie de diffusion 9. Comme on peut le constater, dans tous les cas représentés, l'orifice 11 débouche intégralement dans la partie de diffusion 9, à un endroit tel que le flux d'air frais est guidé par la partie de diffusion 9, ce qui garantit un refroidissement correct de la surface extérieure 5. Bien entendu, on obtient la meilleure diffusion lorsque l'orifice 11 débouche sensiblement au fond de la partie de diffusion 9, comme représenté en traits pleins.

## Revendications

1. Procédé pour ménager un canal de refroidissement (6) dans une paroi (1) présentant une surface intérieure (3) et une surface extérieure (5) susceptible d'être refroidie par l'air frais circulant dans ledit canal (6), ce canal comprenant un perçage (7) et une partie de diffusion (9), le perçage (7) débouchant, d'un côté, au niveau de la surface intérieure (3) et, de l'autre, dans la partie de diffusion (9) en formant un orifice (11), la partie de diffusion (9) s'évasant autour de cet orifice (11) et débouchant sur la surface extérieure (5), **caractérisée en ce que**, selon deux étapes distinctes, on perce la paroi (1) pour réaliser ledit perçage (7) et on forme une empreinte dans la paroi (1) pour réaliser ladite partie de diffusion (9) en utilisant une électrode (20) d'électroérosion, le bout (22) de cette électrode (20) ayant la forme d'un cône (23) dont l'extrémité (24) est arrondie et dont la surface conique (25) présente un méplat (26).

2. Procédé selon la revendication 1, **caractérisé en ce qu'**on perce au laser la paroi (1) pour réaliser ledit perçage (7).

3. Procédé selon la revendication 1 ou 2, **caractérisé en ce que** l'axe (E) dudit cône (23) ne traverse pas ledit méplat (26).

4. Procédé selon l'une quelconque des revendications 1 à 3, **caractérisé en ce qu'**on forme ladite empreinte en orientant l'axe (E) dudit cône (23) de sorte qu'il soit parallèle à l'axe (B) dudit perçage (7), l'axe (B) du perçage étant, de préférence, décalé vers la surface extérieure (5) de la paroi (1).

5. Elément de paroi dans lequel est ménagé au moins un canal de refroidissement (6), ledit élément de paroi (1) présentant une surface intérieure (3) et une surface extérieure (5) susceptible d'être refroidie par de l'air frais circulant dans ledit canal (6), ce canal comprenant un perçage (7) et une partie de diffusion (9), le perçage (7) débouchant, d'un côté, sur la surface intérieure (3) et, de l'autre, dans la partie de diffusion (9) en formant un orifice (11), la partie de diffusion (9) s'évasant autour de cet orifice (11) et débouchant sur la surface extérieure (5), **caractérisé en ce que** la partie de diffusion comprend un fond avant (13) sensiblement plan, incliné dans l'épaisseur de la paroi (1), s'étendant à l'avant de l'orifice (11) dans le sens d'écoulement de l'air frais, et une bordure (15) s'étendant à l'arrière, sur les côtés et à l'avant de l'orifice (11), cette bordure (15) rejoignant les côtés du fond avant (13), et **en ce que** le fond avant (13) et la bordure (15) s'inscrivent dans un cône (23) dont l'extrémité (24) est arrondie et dont la surface conique (25) présente un méplat (26).

6. Elément de paroi selon la revendication 5, **caractérisé en ce que** le contour du fond avant (13) a la forme générale d'un triangle dont l'un des sommets est tourné vers ledit orifice (11), de manière à élargir le flux d'air frais (F) sortant du perçage (7).

7. Elément de paroi selon la revendication 5 ou 6, **caractérisé en ce que** l'angle formé entre la bordure (15) et le fond avant (13) dans un plan perpendiculaire au fond avant (13), est strictement supérieur à 90°.

8. Elément de paroi selon l'une quelconque des revendications 5 à 7, **caractérisé en ce que** l'axe (E) dudit cône (23) est parallèle à l'axe (B) du perçage (7), l'axe (B) du perçage étant, de préférence, décalé vers la surface extérieure (5) de la paroi (1).

9. Aube creuse de turbomachine comprenant un élément de paroi selon l'une quelconque des revendications 5 à 8.

10. Turbomachine comprenant une aube creuse comprenant un élément de paroi selon l'une quelconque des revendications 5 à 8.

11. Electrode pour former une empreinte dans une paroi (1) par électroérosion, **caractérisée en ce que** le bout (22) de cette électrode (20) a la forme d'un cône (23) dont l'extrémité (24) est arrondie et dont la surface conique latérale (25) présente un méplat (26), l'axe dudit cône (23) ne traversant pas ledit méplat (26).

## Claims

1. A method of forming a cooling channel (6) in a wall (1) with an inside surface (3) and an outside surface (5) that is capable of being cooled by cool air flowing in said channel (6), where the channel includes an aperture (7) and a diffusion part (9), with the aperture (7) opening out at one side onto the inside surface (3), and at its other side onto the diffusion part (9) where it forms an orifice (11), with the diffusion part (9) flaring around this orifice (11) and opening out onto the outside surface (5), **characterised in that**, in two distinct steps, the wall (1) is pierced to make said aperture (7), and an indentation is created in the wall (1) in order to create said diffusion part (9), using an electro-erosion electrode (20), with the end (22) of this electrode (20) being in the shape of a cone (23), the end (24) of which is rounded, and whose conical surface (25) exhibits a flat (26).

2. A method according to claim 1, **characterised in that** the wall (1) is pierced with a laser in order to create said aperture (7).

3. A method according to claim 1 or 2, **characterised in that** the axis (E) of said cone (23) does not traverse said flat (26).

4. A method according to any one of claims 1 to 3, **characterised in that** said indentation is formed by orienting the axis (E) of said cone (23) so that it is parallel to the axis (B) of said aperture (7), with the aperture axis (B) preferably being offset toward the outside surface (5) of the wall (1).

5. A wall element in which at least one cooling channel (6) is created, said wall element (1) having an inside surface (3) and an outside surface (5) that is capable of being cooled by cool air flowing in said channel (6), this channel including an aperture (7) and a diffusion part (9), with the aperture (7) opening out at one side onto the inside surface (3), and at its other side onto the diffusion part (9) where it forms an orifice (11), the diffusion part (9) flaring around said orifice (11) and opening out onto the outside surface (5), **characterised in that** the diffusion part includes a front bottom (13) that is substantially plane, sloped into the thickness of the wall (1), extending to the front of the orifice (11) in the direction of flow of the cool air, and a border (15) extending at the back, on the sides and at the front of the orifice (11), with this border (15) meeting the sides of said front bottom (13), and **in that** the border (15) and the front bottom (13) fit inside a cone (23) whose end (24) is rounded, and whose conical surface (25) exhibits a flat (26).

6. A wall element according to claim 5, **characterised in that** the contour of the front bottom (13) has the general shape of a triangle, one vertex of which points toward said orifice (11) so as to broaden the flow of cool air (F) leaving the aperture (7).

7. A wall element according to claim 5 or 6, **characterised in that** the angle formed between the border (15) and the front bottom (13) in a plane perpendicular to the front bottom (13) is strictly greater than 90°.

8. A wall element according to any one of claims 5 to 7, **characterised in that** the axis (E) of said cone (23) is parallel to the axis (B) of the aperture (7), with the axis (B) of the aperture preferably being offset toward the outside surface (5) of the wall (1).

9. A hollow turbomachine blade that includes a wall element according to any one of claims 5 to 8.

10. A turbomachine that includes a hollow blade with a wall element according to any one of claims 5 to 8.

11. An electrode to form an indentation in a wall (1) by electro-erosion, **characterised in that** the end (22) of this electrode (20) has the shape of a cone (23) whose end (24) is rounded, and whose conical surface (25) exhibits a flat (26), though the axis of said cone (23) does not traverse said flat (26) .

## Patentansprüche

1. Verfahren zum Ausbilden eines Kühlkanals (6) in einer Wand (1), die eine Innenseite (3) und eine Außenseite (5) aufweist, welche geeignet ist, durch die in dem Kanal (6) zirkulierende Frischluft gekühlt zu werden, wobei dieser Kanal eine Bohrung (7) sowie einen Diffusionsteil (9) aufweist, wobei die Bohrung (7) auf der einen Seite im Bereich der Innenseite (3) und auf der anderen Seite, unter Ausbildung einer Öffnung (11), in den Diffusionsteil (9) ausmündet, wobei sich der Diffusionsteil (9) um diese Öffnung (11) herum erweitert und an der Außenseite (5) ausmündet, **dadurch gekennzeichnet, daß** in zwei unterschiedlichen Schritten die Wand (1) durchbohrt wird, um die Bohrung (7) auszubilden, und unter Verwendung einer Elektroerosionselektrode (20) in der Wand (1) eine Vertiefung gebildet wird, um den Diffusionsteil (9) herzustellen, wobei das Ende (22) dieser Elektrode (20) die Form eines Kegels (23) aufweist, dessen Ende (24) abgerundet ist und dessen Kegelfläche (25) eine Abflachung (26) aufweist.

2. Verfahren nach Anspruch 1, **dadurch gekennzeichnet, daß** die Wand (1) mittels Laser durchbohrt wird, um die Bohrung (7) herzustellen.

3. Verfahren nach Anspruch 1 oder 2, **dadurch gekennzeichnet, daß** die Achse (E) des Kegels (23) nicht die Abflachung (26) durchquert.

4. Verfahren nach einem der Ansprüche 1 bis 3, **dadurch gekennzeichnet, daß** die Vertiefung hergestellt wird, indem die Achse (E) des Kegels (23) derart ausgerichtet wird, daß sie parallel zur Achse (B) der Bohrung (7) verläuft, wobei die Achse (B) der Bohrung vorzugsweise zur Außenseite (5) der Wand (1) hin versetzt ist.

5. Wandelement, in dem wenigstens ein Kühlkanal (6) ausgebildet ist, wobei das Wandelement (1) eine Innenseite (3) und eine Außenseite (5) aufweist, die geeignet ist, durch in dem Kanal (6) zirkulierende Frischluft gekühlt zu werden, wobei dieser Kanal eine Bohrung (7) sowie einen Diffusionsteil (9) umfaßt, wobei die Bohrung (7) auf der einen Seite an der Innenseite (3) und auf der anderen Seite, unter Ausbildung einer Öffnung (11), in den Diffusionsteil (9) ausmündet, wobei sich der Diffusionsteil (9) um diese Öffnung (11) herum erweitert und an der Außenseite (5) ausmündet, **dadurch gekennzeichnet, daß** der Diffusionsteil einen im wesentlichen ebenen, in der Dicke der Wand (1) geneigten vorderen Boden (13) aufweist, der sich vor der Öffnung (11) in Strömungsrichtung der Frischluft erstreckt, sowie eine Umrandung (15), die sich hinten über die Seiten und vor der Öffnung (11) erstreckt, wobei diese Umrandung (15) die Seiten des vorderen Bodens (13) verbindet, und daß der vordere Boden (13) und die Umrandung (15) sich einem Kegel (23) einbeschreiben, dessen Ende (24) abgerundet ist und dessen Kegelfläche (25) eine Abflachung (26) aufweist.

6. Wandelement nach Anspruch 5, **dadurch gekennzeichnet, daß** die Kontur des vorderen Bodens (13) allgemein dreieckförmig ist, wobei die eine der Spitzen des Dreiecks der Öffnung (11) zugewandt ist, so daß der aus der Bohrung (7) austretende Frischluftstrom (F) erweitert wird.

7. Wandelement nach Anspruch 5 oder 6, **dadurch gekennzeichnet, daß** der Winkel, der zwischen der Umrandung (15) und dem vorderen Boden (13) in einer zu dem vorderen Boden (13) senkrechten Ebene gebildet wird, strikt größer als 90° ist.

8. Wandelement nach einem der Ansprüche 5 bis 7, **dadurch gekennzeichnet, daß** die Achse (E) des Kegels (23) parallel zur Achse (B) der Bohrung (7) verläuft, wobei die Achse (B) der Bohrung vorzugsweise zur Außenseite (5) der Wand (1) hin versetzt ist.

9. Hohle Turbomaschinenschaufel, die ein Wandelement nach einem der Ansprüche 5 bis 8 aufweist.

10. Turbomaschine, die eine hohle Schaufel aufweist, welche ein Wandelement nach einem der Ansprüche 5 bis 8 umfaßt.

11. Elektrode zum Ausbilden einer Vertiefung in einer Wand (1) mittels Elektroerosion, **dadurch gekennzeichnet, daß** das Ende (22) dieser Elektrode (20) die Form eines Kegels (23) aufweist, dessen Ende (24) abgerundet ist und dessen Kegelmantelfläche (25) eine Abflachung (26) aufweist, wobei die Achse des Kegels (23) nicht die Abflachung (26) durchquert.
